# EUROPÄISCHE PATENTSCHRIFT

(11) **EP 0 994 768 B1**
(45) Veröffentlichungstag und Bekanntmachung des Hinweises auf die Patenterteilung: **23.11.2005**
(21) Anmeldenummer: 98934983.2
(22) Anmeldetag: 19.06.1998
(51) Int. Cl.: B29C 45/17, B60K 15/03

(54) **KUNSTSTOFFBEHÄLTER UND VERFAHREN ZU SEINER HERSTELLUNG**
PLASTIC CONTAINER AND METHOD FOR USING THE SAME
CONTENANT EN MATIERE PLASTIQUE ET SON PROCEDE DE PRODUCTION

(30) Priorität: 09.07.1997 DE 19729261; 05.06.1998 DE 19825104
(43) Veröffentlichungstag der Anmeldung: 26.04.2000
(73) Patentinhaber: SIEMENS AKTIENGESELLSCHAFT, 80333 München (DE)
(72) Erfinder: KELLER, Dieter, D-63743 Aschaffenburg (DE); MAASZ, Martin, D-65843 Sulzbach (DE); ECK, Karl, D-60489 Frankfurt (DE); KOCHSMEIER, Christian, D-32816 Brakelsiek (DE)
(86) Internationale Anmeldenummer: PCT/EP1998/003755
(87) Internationale Veröffentlichungsnummer: WO 1999/002327

(56) Entgegenhaltungen:
- DE-A- 19 637 925
- DE-U- 9 016 703
- GB-A- 2 158 002
- PATENT ABSTRACTS OF JAPAN vol. 016, no. 343 (M-1285), 24.Juli 1992 & JP 04 103317 A (NIFCO INC), 6.April 1992,

## Beschreibung

Die Erfindung betrifft einen Kunststoffbehälter, insbesondere einen Kraftstoffbehälter eines Kraftfahrzeugs, mit einer medienführenden Leitung. Weiterhin betrifft die Erfindung ein Verfahren zur Herstellung eines solchen Kunststoffbehälters.

Solche als Kraftstoffbehälter ausgebildete Kunststoffbehälter werden in heutigen Kraftfahrzeugen eingesetzt und sind daher bekannt. Sie umfassen medienführende Leitungen, welche gegenwärtig nach dem Herstellen des Behälters über eine Einfüllöffnung oder über spezielle Montageöffnungen in den Behälterinnenraum eingeführt und darin befestigt werden müssen. Eine Leitung muß beispielsweise als Ansaugleitung für eine Kraftstoffpumpe im Bereich des Behälterbodens des Kraftstoffbehälters geführt werden. Damit eine ausreichende Versorgung mit Kraftstoff unter allen möglichen Betriebsbedingungen sichergestellt ist, muß diese Leitung zur tiefsten Stelle des Kraftstoffbehälters führen und sollte auch im Fahrbetrieb ihre Position nicht verändern. Das ist bei den heutigen Kunststoffbehältern nur mit verhältnismäßig großem Aufwand zu erreichen, so die Herstellung solcher Behälter teuer ist.

Dennoch besteht die Gefahr, dass sich im rauen Fahrbetrieb die Position der Einbauteile verändert und dann beispielsweise kein Kraftstoff mehr angesaugt wird, bevor der Kraftstoffbehälter wirklich leer ist. Kunststoffbehälter dieser Art stellt man häufig im Blasverfahren her. Dabei wird in einer Hohlform ein frisch extrudiertes Rohr mit Innendruck beaufschlagt, so dass sich seine Wandung gegen die Wandung der Hohlform anlegt. Dieses Verfahren hat den Nachteil, dass besondere Ausformungen des Innenraums nur in sehr beschränktem Umfang möglich sind, insbesondere lassen sich keine festen Leitungseinbauten realisieren.

Wenn man an der Innenwand eines Spritzguss-Behälters Bauelemente anformen will, dann erzeugt man bislang solche Behälter aus mindestens zwei im Spritzgießverfahren hergestellten Schalen. Zum Herstellen jeder Schale benutzt man eine Hohlform, in welche eine Innenform derart eingreift, dass nur die Bereiche frei bleiben, welche nach dem Einsritzen des Kunststoffes Wandung und evtl. angeformte Bauelemente bilden sollen. Auch bei einem solchen Spritzgießverfahren besteht bisher nicht die Möglichkeit, im Inneren des Kunststoffbehälters vorgesehene Bauelemente hohl auszubilden.

Bei einem aus der JP-A-103 31 und der EP 0 745 468 bekannten Verfahren zum Herstellen von Kunststoff-Spritzgussformteilen entsteht ein Hohlkörper durch Befüllen des Innenraums einer Hohlform mit Spritzgießmasse und anschließendes Beaufschlagen des Form-Innenraums mit Druckgas (Gasinnen-druck- (GID) technik). Dabei wird die noch weiche Spritzgießmasse an die Innenseite des Spritzgießwerkzeuges gepresst. Eine Leitung zur Führung eines Mediums ist damit nicht erzeugbar.

Nacheilig bei dem beschriebenen Verfahren wirkt sich aus, dass zum Befüllen bzw. Entleeren des einteiligen Hohlkörpers mit Gas zumindest zwei weitere Öffnungen in der Wandung des Hohlkörpers erforderlich sind. Diese müssen in einem weiteren Arbeitsgang verschlossen werden. Weiterhin wirkt sich nachteilig aus, dass mit dem beschriebenen Verfahren im Inneren des Hohlkörpers keine weiteren Bauelemente, beispielsweise Leitungen entlang einer Innenwand, angeordnet werden können, ohne die Wandung des umgebenden Behälters zu durchbrechen. Im Inneren benötigte Leitungen müssten wie beim eingangs genannten Stand der Technik in einem zusätzlichen Arbeitsgang verlegt und fixiert werden, wodurch eine Vielzahl von Verbindungselementen zwischen den Leitungsabschnitten sowie Befestigungselementen erforderlich sind.

Ein Verfahren zur Herstellung von rohrförmigen Kunststoffkörpern, wobei innere Leitungen durch Durchblasen von Gas hergestellt werden ist aus der EP-A-0 881 052 bekannt. Diese Schrift betrifft jedoch keine Kunststoffbehälter im Sinne der Anmeldung.

Der Erfindung liegt das Problem zugrunde, ein Verfahren zur Herstellung eines Kunststoffbehälters und einen kostengünstig nach dem Verfahren hergestellten Kunststoffbehälter der eingangs genannten Art zu entwickeln, bei dem die Position von an- oder eingebauten Leitungen zuverlässig festgelegt ist.

Diese Probleme werden erfindungsgemäß gelöst durch die Merkmale der Ansprüche 1 und 4.

Bervorzungte Ausführungen der Erfindung sind in den Unteransprüchen offenbart.

Ein erfindungsgemäßer Kunststoffbehälter benötigt aufgrund der einteilig mit der Wandung des Kunststoffbehälters ausgebildeten Leitungen nur eine geringe Zahl von Verbindungselementen. Durch weitgehenden Entfall von Montagearbeiten ist der Kunststoffbehälter besonders kostengünstig herzustellen. Weiterhin wird durch die einteilige Ausbildung erreicht, dass die Leitungen in ihrer Position zwangsläufig festgelegt sind und ihre Position nicht verändern können. Deshalb eignet sich der erfindungsgemäße Kunststoffbehälter besonders als Kraftstoffbehälter. Für die Verwendung als Kraftstoffbehälter spricht die Vielzahl von Leitungen, insbesondere Kraftstoff-, Belüftungs-und Entlüftungsleitungen im Inneren des Kraftstoffbehälters, die eine ausreichende Versorgung des Motors mit Kraftstoff auch bei starken Neigungen und Temperaturschwankungen bei gleichzeitig hohen Sicherheitsanforderungen gewährleisten sollen.

Ferner darf weder bei einem Unfall noch durch Permeation Kraftstoff austreten. Dies wird durch die besondere Eigenschaft des erfindungsgemäßen Kunststoffbehälters möglich. Dieser hat Bereiche hoher Steifigkeit und Bereiche hoher Elastizität. Gleichzeitig wird die Anzahl der Verbindungselemente reduziert.

Bei dem erfindungsgemäßen Kunststoffbehälter können die Leitungen auch dort vorgesehen werden, wo ihre nachträgliche Montage bei den bisherigen Kunststoffbehältern nicht oder nur sehr aufwendig möglich war. Schließlich ist falscher Leitungsverlauf durch Montagefehler ausgeschlossen.

Weiterhin können die mechanischen Eigenschaften des Kunststoffbehälters in besonders nutzbringender Weise durch die direkte, versteifende Anbindung der Leitung an die Wandung des Kunststoffbehälters verbessert werden. Insbesondere kann die Wandfestigkeit durch die gezielte Ausgestaltung der Leitung und deren Verlauf parallel zu einer Wand partiell um ein Vielfaches erhöht werden.

Der Effekt der verbesserten mechanischen Eigenschaften kann zusätzlich wesentlich erhöht werden, wenn die medienführende Leitung unter Zwischenlage eines Steges an den Kunststoffbehälter angeformt ist. Die Wirkung der durch einen Steg gebildeten, rippenartigen Verstärkung bewirkt einen erheblichen Anstieg der Wandsteifigkeit des Kunststoffbehälters in dem betreffenden Teilbereich. Der Steg kann dabei weiteren Aufgaben, wie beispielsweise dem Beeinflussen der Fließrichtung in der Leitung oder auch Montagezwecken dienen.

Die mechanischen Eigenschaften können in besonders vorteilhafter Weise in beliebigen Abschnitten der Leitung gezielt beeinflußt werden, wenn der Steg zumindest eine Durchbrechung aufweist. Die in diesem Bereich verringerte Steifigkeit gestattet insbesondere die Gestaltung eines Kunststoffbehälters mit besonders elastischen Eigenschaften. Es läßt sich somit ein Kunststoffbehälter verwirklichen, der in Teilbereichen eine hohe Steifigkeit aufweist, in anderen Teilbereichen gleichzeitig besonders gut elastisch verformbar ist. Im Bereich etwaiger Hinter-oder Unterschneidungen des Stegs gegenüber dem Leitungsquerschnitt wird man die Form mit entsprechenden Teilungen ausführen.

Eine weitere erfindungsgemäße Ausführungsform, bei welcher der Steg über seinen Längsverlauf eine in verschiedenen Bereichen unterschiedliche Stärke oder Höhe aufweist, ermöglicht eine weitgehend beliebige Ausgestaltung der Leitung. Dadurch läßt sich beispielsweise auch bei einem im wesentlichen ebenen Leitungsverlauf durch eine Verstärkung des Steges eine gezielte Aussteifung verwirklichen. Insbesondere können dabei die Anforderungen an das Fließverhalten des in der Leitung geführten Mediums berücksichtigt werden, ohne den Aussteifungseffekt zu beeinflussen. Man kann vor allem auch in einfacher Weise Gefälle oder Steigungen mit fest vorgegebenen Neigungswinkeln darstellen.

Je nach Anforderung ist es wichtig, dass der Kunststoffbehälter keine Versteifung durch angebundene Bauteile aufweist. Dies ist beispielsweise dann der Fall, wenn der Kunststoffbehälter Verformungskräften ausgesetzt ist, und daher elastisch verformbar sein muß. Eine besondere Ausführungsform der Erfindung erfüllt solche Anforderungen, wenn die Leitung lediglich im Bereich einer Anschlußöffnung eine Anbindung zum Kunststoffbehälter aufweist. Dabei verläuft die Leitung weitgehend frei im Innenraum und ist lediglich dort mit der Wandung des Kunststoffbehälters verbunden, wo sie die Wandung durchdringt bzw. mit einem Anschlußelement verbunden ist. Damit entsteht schon beim Urformprozeß des Behälters eine absolut dichte Leitungsdurchführung.

Eine andere besonders vorteilhafte Weiterbildung der Erfindung ist dadurch gegeben, dass der medienführenden Leitung ein Verbindungselement angeformt ist. Dadurch lässt sich der Aufwand bei der Montage reduzieren, da das umständliche, nachträgliche Befestigen separater Verbindungselemente entfallen kann. Weitere Anschlusselemente können daher, beispielsweise mittels eines als Steckverbindung ausgeführten Verbindungselementes problemlos an die Leitung angeschlossen werden. Dabei ist zugleich eine fehlerhafte Montage weitgehend ausgeschlossen.

Hierbei ist eine besonders günstige Ausführungsform dadurch gegeben, dass das Verbindungselement einen formschlüssig mit einer Kupplung zu verbindenden Stecker hat. Durch die formschlüssige Verbindung entsteht eine weitgehend dichte Verbindung, die beispielsweise auch lösbar ausgeführt sein kann. Dabei ist es auch möglich, ein Toleranzmaß derart vorzusehen, dass eine axiale Beweglichkeit erreicht wird. So können sowohl Fertigungstoleranzen als auch betriebsbedingte Verformungen des Kunststoffbehälters ausgeglichen werden und führen daher insbesondere nicht zu einer Beschädigung oder zu Undichtigkeiten des Verbindungselementes.

Vorteilhaft ist es auch, wenn das Verbindungselement zum Anschluss einer Saugstrahlpumpe ausgeführt ist. Die als separates Bauteil in den Kunststoffbehälter einzuführende Saugstrahlpumpe kann daher als weitgehend vorgefertigte Komponente bereits mit einem entsprechenden Kupplungselement ausgestattet sein, so dass die Saugstrahlpumpe unmittelbar in den Kunststoffbehälter eingesetzt werden kann. Dabei lässt sich die Saugstrahlpumpe durch das einteilig angeformte Verbindungselement und der damit einhergehenden, weitgehend steifen Ausführung leicht anschließen, da das Verbindungselement hierfür nicht zusätzlich fixiert werden muss.

Besonders sinnvoll ist es dabei auch, wenn das Verbindungselement zugleich zum Fixieren eines angeschlossenen Bauteiles ausgeführt ist. Hierdurch kann das Verbindungselement zugleich dem Anschluss des Bauteils an die medienführende Leitung und auch zu dessen Positionierung dienen. Weitere Fixiermittel können dadurch eingespart und der Montageaufwand reduziert werden.

Eine Weiterbildung der Erfindung ist dann besonders günstig, wenn die medienführende Leitung in einer ersten Halbschale des Kunststoffbehälters angeordnet ist und das Verbindungselement zum Anschluss einer weiteren, in einer zweiten Halbschale angeordneten, medienführenden Leitung ausgeführt ist. Hierdurch werden die in zwei zunächst getrennten Halbschalen angeordneten Leitungen beim Zusammenfügen der Halbschalen zum Kunststoffbehälter zugleich miteinander verbunden. Die Leitungen können dabei insbesondere auch unabhängig von der späteren Zugänglichkeit zum Innenraum des Kunststoffbehälters angeordnet sein. Dadurch können die hierfür anderenfalls erforderlichen Montageöffnungen entfallen, so dass sich eine wesentlich vereinfachte Gestaltung des Kunststoffbehälters erreichen lässt.

Bei dem erfindungsgemäßen Verfahren werden das an sich bekannte Spritzgießverfahren und die gebräuchliche Gasinnendrucktechnik in besonders vorteilhafter Weise miteinander kombiniert und zum Herstellen auch innenliegender Leitungen eingesetzt. Die Halbschale entsteht durch das Befüllen des Raumes zwischen der Hohlform und der Innenform mit Spritzgießmasse.

Die in Rede stehenden Behälter sind Großserienteile. Deshalb ist selbst ein verhältnismäßig hoher Aufwand beim Formenbau im Vergleich billiger als die Arbeitsgänge zum nachträglichen Einbau der Leitungen, insbesondere im Hinblick auf die deutliche Verringerung der Fehlerrate. Durch Anwendung des erfindungsgemäßen Verfahrens können alle erforderlichen Leitungen im Inneren in einem einzigen Arbeitsgang direkt angeformt werden. Zusätzliche Arbeitsschritte zur Montage und Verbindung der Leitungen entfallen. Weiterhin entfallen durch die einteilige bzw. einstückige Ausführung diverse Abdichtungsprobleme.

In einer Weiterbildung dieses Verfahrens wird man die Mantelfläche bzw. Umgebung des besagten Angußkörpers in der Form bevorzugt kühlen, damit dessen Außenwand sich bevorzugt verfestigt, bevor man das Druckgas in die entsprechenden Formkanäle einbläst und den Kern des Angußkörpers entlang dem gewünschten Verlauf ausbläst. Weiter ist von Vorteil, dass man die Form bzw. den Verlauf des Hohlraums im Angußkörper gemäß einer Weiterbildung nicht nur geradlinig, sondern auch geknickt oder gekrümmt anlegen kann.

Der erfindungsgemäße Kunststoffbehälter und das Verfahren lassen verschiedene Abwandlungen zu. Zur weiteren Verdeutlichung der Erfindung wird nachfolgend auf die Zeichnung Bezug genommen. Diese zeigt in
- Fig.1: eine perspektivische Darstellung eines erfindungsgemäßen Kunststoffbehälters mit einer innenliegenden Leitung,
- Fig.2: einen Leitungsabschnitt mit einem eine Durchbrechung aufweisenden Steg,
- Fig.3: eine Schnittdarstellung eines Kunststoffbehälters mit einem Anschlusselement.
- Fig.4: eine Schnittdarstellung durch eine zweiteilige Form nebst Gaskanälen zum Herstellen einer Halbschale des Behälters,
- Fig.5: eine Schnittdarstellung des in Figur 2 gezeigten Leitungsabschnittes mit einem Verbindungselement,
- Fig.6: eine Schnittdarstellung eines Leitungsabschnittes mit einem anderen Verbindungselement.

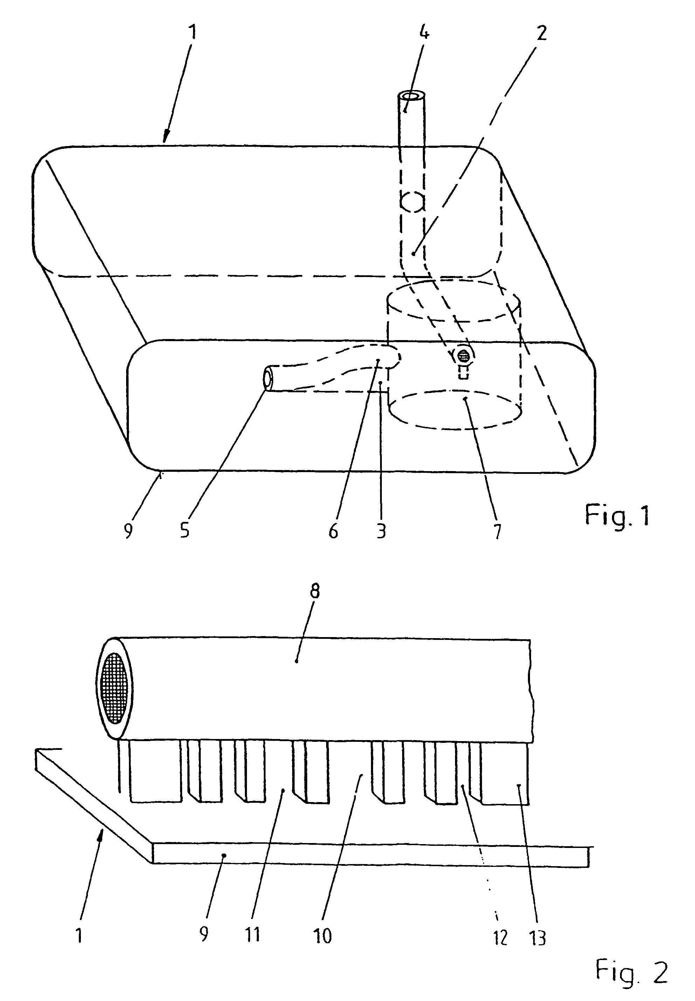

Die Figur 1 zeigt eine perspektivische Darstellung eines Kunststoffbehälters 1 mit einer abschnittsweise innenliegenden Leitung 2, die eine außerhalb des Kunststoffbehälters 1 liegende Öffnung 4 und eine innerhalb des Kunststoffbehälters 1 nahe dessen Behälterboden 9 liegende Öffnung 5 hat. Die Leitung 2 verläuft von der Öffnung 4 zunächst vertikal entlang der Außenseite des Kunststoffbehälters 1 und führt dann in dessen Innenraum. Von der anderen Öffnung 5 verläuft die Leitung 2 zunächst nahe dem Behälterboden 9 des Kunststoffbehälters 1. Mit dem Behälterboden 9 ist sie durch einen Steg 3 verbunden.

Lediglich schematisch dargestellt und mit den Leitungsabschnitten der Leitung 2 verbunden ist ein Einbauelement 7, beispielsweise eine Kraftstoffördereinheit. In einem dem Einbauelement 7 zugewandten, ansteigenden Abschnitt 6 ist die Leitung 2 mittels des Steges 3 an dem Behälterboden 9 angebunden.

Figur 2 zeigt einen Abschnitt einer Leitung 8, der auf einem Ausschnitt des Behälterbodens 9 des im übrigen nicht mehr dargestellten Kunststoffbehälters 1 angeordnet ist und parallel zum Behälterboden verläuft. Eine Anbindung der Leitung 8 weist mehrere Durchbrechungen 10, 11, 12 auf, die eine gezielte Aussteifung bzw. Elastizität des Behälterbodens 9 ermöglichen. Dabei bewirkt die breite Durchbrechung 10 im Vergleich zu den schmaleren Durchbrechungen 11, 12 eine lediglich geringfügige Aussteifung im Gegensatz zu einer starken Aussteifung bei der besonders schmalen Durchbrechung 12 bzw. einem keine Durchbrechungen aufweisenden Steg 13.

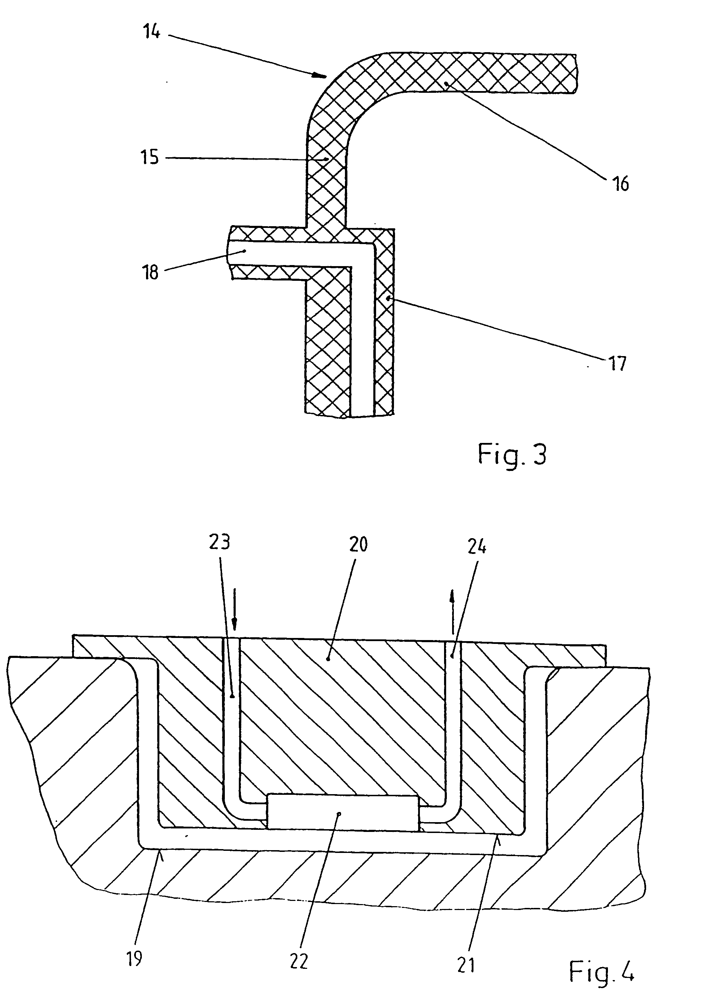

Figur 3 zeigt eine Schnittdarstellung eines Kunststoffbehälters 14 mit einer inneren Behälterwand 16 und einer äußeren Behälterwand 15. Der äußeren Behälterwand 15 ist eine Anschlußöffnung 18 angeformt, während mit der inneren Behälterwand 15 eine Leitung 17 direkt verbunden ist und sich parallel zur Wand erstreckt. Hieraus ergibt sich, dass die Leitung 17 abschnittsweise sowohl im Behälterinneren als auch außerhalb dessen Wand verlaufen kann und letztere als Durchführung passiert.

Zum Verdeutlichen des Herstellungsverfahrens wird nun auf Figur 4 Bezug genommen. Diese zeigt eine Hohlform 19, in welche von oben her als Stempel eine Innenform 20 eingesetzt ist. Letztere hat in ihrer Bodenfläche 21 eine sich im wesentlichen parallel zur Wand der Außenform erstreckende Ausnehmung 22, welche der Außenkontur einer am Behälterboden zu erzeugenden Leitung entspricht. In der Innenform 20 ist ein Druckgaskanal 23 vorgesehen, welcher bis vor eine Stirnseite der Ausnehmung 22 führt. Weiterhin hat die Innenform 20 eine Auslassleitung 24, welche vor der anderen Stirnseite der Ausnehmung 22 endet.

Zum Herstellen einer Halbschale eines Kunststoffbehälters spritzt man in den Raum zwischen der Hohlform 19 und der Innenform 20 Kunststoffmasse ein. Dadurch wird auch die Ausnehmung 22 mit Kunststoffvolumen ausgefüllt, das einen länglichen Anspritz- oder Angußkörper bildet. Bevor dieser vollständig aushärten kann, führt man ihm über den Druckgaskanal 23 an einer Stirnseite Druckgas zu. Dieses bläst dann den noch flüssigen Kunststoff im Inneren des Angußkörpers über die Auslassleitung 24 nach außen, so dass darin ein als Leitung nutzbarer Hohlraum entsteht. Wie schon erwähnt, sind ggf. Kühlmittelkanäle oder -räume in der Form 19, 20 anzuordnen, die hier nicht gezeigt sind.

Angußkörper können mit diesem Verfahren auch als eine Wand durchdringende Körper angelegt und hernach hohlgeblasen werden. Zum Erzeugen eines geradlinig durchdringenden bzw., wie in Fig. 3 gezeigt, abknickenden Leitungsverlaufs durch Ausblasen des Kerns des betreffenden Angußkörpers sind natürlich abweichend von Fig. 4 Kanäle für das Druckgas sowohl in der Innenform als auch in der Außenform vorzusehen. Auch wird man innerhalb der (Außen-und Innen-)Formen entsprechende -nicht gezeigte- Kühlmittelkanäle oder -räume vorsehen, über die die Wandbereiche des Angußkörpers bzw. der zu fertigenden Leitung nach dem Spritzen der Kunststoffmasse bevorzugt abgekühlt werden. Diese erstarren dann deutlich schneller als die innenliegende Materialhäufung der bekanntlich schlecht wärmeleitenden Kunststoffmasse. Beim Durchblasen von Druckgas nimmt dieses den Weg des geringsten Widerstands durch die noch flüssige oder zumindest weiche Kernmasse, läßt aber die schon ausgehärteten Wände unberührt. Nach dem vollständigen Aushärten beider Halbschalen werden diese in bekannter Weise zum vollständigen Behälter vereint, z. B. durch eine längs ihrer aneinanderstoßenden Ränder umlaufende Schweißnaht unlösbar miteinander verbunden.

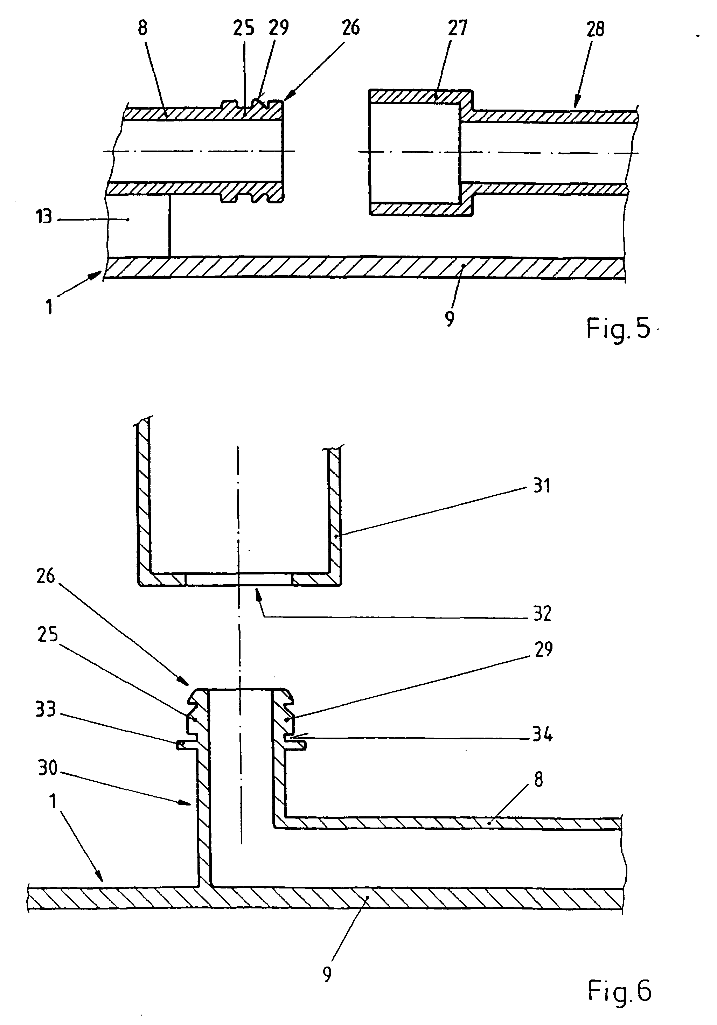

Die Figur 5 zeigt in einer geschnittenen Darstellung einen Abschnitt der in Figur 2 gezeigten und mit dem Behälterboden 9 verbundenen Leitung 8 des Kunststoffbehälters 1. Die mittels des Steges 13 an dem Behälterboden 9 angeordnete Leitung 8 besitzt hierbei ein mit einem Stecker 25 versehenes Verbindungselement 26, welches zum Anschluss eines mit einer Kupplung 27 versehenen Bauteiles 28, welches beispielsweise eine Saugstrahlpumpe sein kann, ausgeführt ist. Der Stecker 25 ist hierbei der Leitung 8 unmittelbar angeformt, so dass die Montage des Bauteiles 28 durch einfaches Zusammenstecken des Steckers 25 mit der Kupplung 27 erfolgt. Der Stecker 25 weist eine Dichtlippe 29 auf, die eine im Niederdruckbereich des Kraftstoffsystemes ausreichend dichte Verbindung ermöglicht, wobei insbesondere auch durch eine einheitliche Materialauswahl die Dichtung des Verbindungselementes 26 verbessert werden kann. Für erhöhte Anforderungen an die Dichtung lässt sich zusätzlich ein nicht dargestellter Dichtring an dem Stecker 25 anbringen. Der Stecker 25 ist bei der dargestellten Ausführungsform derart in der Kupplung 27 verschieblich gehalten, dass ein axiales Spiel insbesondere zum Ausgleich von Fertigungstoleranzen erreicht wird und so die Montage bzw. Demontage weiter vereinfacht werden kann.

Die Figur 6 zeigt in einer Schnittdarstellung einen Abschnitt einer unmittelbar an dem Behälterboden 9 des Kunststoffbehälters 1 angeformten Leitung 8. Die Leitung 8 weist hierbei einen Endabschnitt 30 auf, welchem das als Stecker 25 ausgeführte Verbindungselement 26 angeformt ist. Ein lediglich abschnittsweise dargestelltes Bauteil 31 ist dabei mit einer Öffnung 32 versehen, durch die der Stecker 25 dichtend eingesetzt werden kann und dadurch zugleich das Bauteil 31 in seiner Einbauposition fixiert ist. Der Stecker 25 weist hierzu neben der Dichtlippe 29 eine Erweiterung 33 auf, welche als Anschlag für den in die Öffnung einzusetzenden Stecker 25 dient. In eine Nut 34 ist ein nicht dargestellter Dichtring einsetzbar, so dass auch höhere Anforderung an die Dichtheit, insbesondere bei Einsatz im Hochdruckkreislauf des Kraftstoffsytemes erfüllt werden können. Der Stecker 25 kann auch mit einem Rastkörper, beispielsweise einer Clips-Verbindung, ausgestattet sein, so dass eine lösbare oder unlösbare Fixierung des angeschlossenen Bauteiles 31 ohne weitere Hilfsmittel zu erreichen ist.

## Patentansprüche

1. Verfahren zur Herstellung eines Kunststoffbehälters (1, 14), insbesondere eines Kraftstoffbehälters, welcher mindestens eine medienführende Leitung umfasst, wobei
a) der Kunststoffbehälter (1, 14) aus zwei jeweils mittels einer Hohlform (19) und einer in diese eingreifenden, als Stempel ausgeführten Innenform (20) im Spritzgießverfahren hergestellten Schalen gefertigt wird und
b) durch eine Gestaltung der Form an einer Innen-und/oder Außenwand an mindestens einer der Schalen ein Angusskörper in einer Ausnehmung (22) angeformt wird, und
c) anschließend nach Druckausgleich und teilweiser Verfestigung in dem Angusskörper mittels Gasinnendrucktechnik ein die Leitung (2, 4, 8, 17) bildender Hohlraum ausgebildet wird, indem
d) ein unter Druck stehendes Gas über wenigstens einen Kanal (23) im Bereich der Ausnehmung (22) der Form (20) zugeführt, Kernmaterial des Angusskörpers über eine Auslassleitung (24) nach außen ausgeblasen und mit dem Gas abgeleitet wird und
e) anschließend die Schalen dicht miteinander verbunden werden.

2. Verfahren nach Anspruch 1, **dadurch gekennzeichnet, dass** die Mantelfläche bzw. die Umgebung des besagten Angusskörpers (22) in der Form bevorzugt gekühlt wird, vor das Druckgas in die entsprechenden Formkanäle (23, 24) eingeblasen und der Kern des An gusskörpers (22) entlang dem gewünschten Verlauf ausgeblasen wird.

3. Verfahren nach Anspruch 2, **dadurch gekennzeichnet, dass** der Angusskörper (22) entlang einem winkligen oder gebogenen Verlauf bevorzugt gekühlt und ein ungeradlinig verlaufender Hohlraum erzeugt wird.

4. Kunststoffbehälter, insbesondere Kraftstoffbehälter eines Kraftfahrzeugs, mit einer zumindest abschnittsweise mit seiner Wand verbundenen medienführenden Leitung nach dem Verfahren einer der Ansprüche 1 - 3

5. Kunststoffbehälter nach Anspruch 4, **dadurch gekennzeichnet, dass** die angeformte Leitung (2, 4, 8, 17) wenigstens abschnittsweise parallel zu der jeweiligen Wand (9, 15, 16) verläuft.

6. Kunststoffbehälter nach Anspruch 4 oder 5, **dadurch gekennzeichnet, dass** zumindest ein Abschnitt der Leitung (2, 8, 17) in seinem Inneren verläuft und an eine Innenwand (9, 16) angeformt ist.

7. Kunststoffbehälter nach einem der Ansprüche 4 - 6, **dadurch gekennzeichnet, dass** zumindest ein Abschnitt der Leitung (4) außen verläuft und an eine Außenwand (15) angeformt ist.

8. Kunststoffbehälter nach einem der Ansprüche 4 - 7, **dadurch gekennzeichnet, dass** zwischen der Wand (9, 15, 16) und einem sich parallel dazu erstreckenden Leitungsabschnitt (2, 4, 8, 17) ein Steg (3, 13) ausgeformt ist.

9. Kunststoffbehälter nach Anspruch 5, **dadurch gekennzeichnet, dass** der Steg (3, 13) zumindest eine Durchbrechung (10, 11, 12) aufweist.

10. Kunststoffbehälter nach Anspruch 5 oder 6, **dadurch gekennzeichnet, dass** der Steg (3, 13) über seinen Verlauf unterschiedliche Stärken und/oder Höhen aufweist.

11. Kunststoffbehälter nach Anspruch 4, **dadurch gekennzeichnet, dass** die Leitung (2, 4, 8, 17) lediglich im Bereich einer Anschlussöffnung (18) eine stoffschlüssige Anbindung zum Kunststoffbehälter (1, 14) aufweist.

12. Kunststoffbehälter nach Anspruch 4 - 7, **dadurch gekennzeichnet, dass** der medienführenden Leitung (2, 8, 17) ein Verbindungselement (26) angeformt ist.

13. Kunststoffbehälter nach Anspruch 12, **dadurch gekennzeichnet, dass** das Verbindungselement (26) einen formschlüssig mit einer Kupplung (27) zu verbindenden Stecker (25) hat.

14. Kunststoffbehälter nach Anspruch 12 oder 13, **dadurch gekennzeichnet, dass** das Verbindungselement (26) zum Anschluss einer Saugstrahlpumpe ausgeführt ist.

15. Kunststoffbehälter nach einem der Ansprüche 4 - 14, **dadurch gekennzeichnet, dass** das Verbindungselement (26) zugleich zum Fixieren eines angeschlossenen Bauteiles (28, 31) ausgeführt ist.

16. Kunststoffbehälter nach einem der Ansprüche 4 - 15, **dadurch gekennzeichnet, dass** die medienführende Leitung (2, 8, 17) in einer ersten Halbschale des Kunststoffbehälters (1, 14) angeordnet ist und das Verbindungselement (26) zum Anschluss einer weiteren, in einer zweiten Halbschale angeordneten, medienführenden Leitung (2, 8, 17) ausgeführt ist.

## Claims

1. Method for producing a plastic container (1, 14), in particular a fuel tank, which comprises at least one media-carrying line,
a) the plastic container (1, 14) being manufactured from two shells respectively produced by injection moulding by means of a hollow mould (19) and an inner mould (20) engaging in the latter and designed as a core, and
b) a shaping of the mould having the effect that on an inside and/or outside wall of at least one of the shells a sprue body is moulded on in a recess (22), and
c) subsequently, after pressure equalization and partial solidification, a hollow space, forming the line (2, 4, 8, 17), is formed in the sprue body by means of the internal gas pressure technique, in that
d) a pressurized gas is fed into the mould (20) via at least one channel (23) in the region of the recess (22), core material of the sprue body is blown out to the outside via an outlet line (24), and
e) the shells are subsequently connected to each other in a sealed manner.

2. Method according to Claim 1, **characterized in that** the outer surface or the surrounding area of the said sprue body (22) is cooled preferentially in the mould before the compressed gas is blown into the corresponding mould channels (23, 24) and the core of the sprue body (22) is blown out along the desired path.

3. Method according to Claim 2, **characterized in that** the sprue body (22) is cooled preferentially along an angular or arcuate path and an unrectilinear hollow space is created.

4. Plastic container, in particular fuel tank of a motor vehicle, having a media-carrying line connected at least in certain sections to its wall, according to the method of one of Claims 1 - 3.

5. Plastic container according to Claim 4, **characterized in that** the moulded-on line (2, 4, 8, 17) runs at least in certain sections parallel to the respective wall (9, 15, 16).

6. Plastic container according to Claim 4 or 5, **characterized in that** at least one section of the line (2, 8, 17) runs in its interior and is moulded onto an inside wall (9, 16).

7. Plastic tank according to one of Claims 4 - 6, **characterized in that** at least one section of the line (4) runs on the outside and is moulded onto an outside wall (15).

8. Plastic container according to one of Claims 4 - 7, **characterized in that** a web (3, 13) is formed between the wall (9, 15, 16) and a section of line (2, 4, 8, 17) extending parallel thereto.

9. Plastic container according to Claim 5, **characterized in that** the web (3, 13) has at least one aperture (10, 11, 12).

10. Plastic container according to Claim 5 or 6, **characterized in that** the web (3, 13) has different thicknesses and/or heights over its length.

11. Plastic container according to Claim 4, **characterized in that** the line (2, 4, 8, 17) has an integral attachment to the plastic container (1, 14) only in the region of a connection opening (18).

12. Plastic container according to Claims 4 - 7, **characterized in that** a connecting element (26) is moulded on the media-carrying line (2, 8, 17).

13. Plastic container according to Claim 12, **characterized in that** the connecting element (26) has a plug (25) to be positively connected to a coupling (27).

14. Plastic container according to Claim 12 or 13, **characterized in that** the connecting element (26) is designed for the connection of a sucking jet pump.

15. Plastic container according to one of Claims 4 - 14, **characterized in that** the connecting element (26) is designed at the same time for fixing a connected component (28, 31).

16. Plastic container according to one of Claims 4 - 15, **characterized in that** the media-carrying line (2, 8, 17) is arranged in a first half-shell of the plastic container (1, 14) and the connecting element (26) is designed for the connection of a further media-carrying line (2, 8, 17), arranged in a second half-shell.

## Revendications

1. Procédé destiné à la fabrication d'un réservoir en matière plastique (1, 14), notamment d'un réservoir de carburant, qui renferme au moins une conduite transportant une substance, où
a) le réservoir en matière plastique (1, 14) est constitué de deux coques fabriquées l'une et l'autre en procédé à moulage par injection au moyen d'un moule creux (19) et d'un moule intérieur (20) conçu comme matrice s'introduisant dans le moule creux (19) et,
b) par une configuration du moule, un corps de culot d'injection est façonné dans un évidement (22) sur au moins l'une des coques sur une paroi intérieure et / ou sur une paroi extérieure et,
c) ensuite, par compensation de pression et durcissement partiel, au moyen d'une technique à pression interne de gaz, un espace creux est formé dans le corps de culot d'injection et produit la conduite (2, 4, 8, 17), par le fait
d) qu'un gaz sous pression est appliqué par l'intermédiaire d'au moins un canal (23), dans la zone de l'évidement (22) du moule (20), que de la matière du coeur du corps de culot d'injection est soufflée et expulsée avec le gaz vers l'extérieur par l'intermédiaire d'une conduite de sortie (24), et,
e) ensuite, les coques sont liées l'une à l'autre d'une façon étanche.

2. Procédé selon la revendication 1 **caractérisé par le fait que** la surface d'enveloppe ou l'environnement du dit corps de culot d'injection (22) sont refroidis d'une façon préférentielle dans le moule, insufflés avant le gaz sous pression dans les canaux correspondants (23, 24) du moule et le coeur du corps de culot d'injection (22) est soufflé le long du parcours souhaité.

3. Procédé selon la revendication 2 **caractérisé par le fait que** le corps de culot d'injection (22) est refroidi de préférence le long d'un parcours anguleux ou incurvé et qu'un espace creux ayant un parcours non rectiligne est produit.

4. Réservoir en matière plastique, notamment réservoir à carburant d'un véhicule automobile, ayant une conduite transportant une substance liée au moins partiellement à sa paroi et conforme au procédé de l'une des revendications 1 - 3.

5. Réservoir en matière plastique selon la revendication 4 **caractérisé par le fait que** la conduite (2, 4, 8, 17) formée se développe au moins partiellement parallèlement à la paroi respective (9, 15, 16).

6. Réservoir en matière plastique selon la revendication 4 ou 5 **caractérisé par le fait que** au moins une section de la conduite (2, 8, 17) se développe dans son espace intérieur et est formée sur une paroi intérieure (9, 16).

7. Réservoir en matière plastique selon l'une des revendication 4 - 6 **caractérisé par le fait que** au moins une section de la conduite (4) se développe à l'extérieur et est formée sur une paroi extérieure (15).

8. Réservoir en matière plastique selon l'une des revendication 4 - 7 **caractérisé par le fait qu'**une entretoise (3, 13) est formée entre la paroi (9, 15, 16) et une section de la conduite (2, 4, 8, 17) se développant parallèlement à la paroi.

9. Réservoir en matière plastique selon la revendication 5 **caractérisé par le fait que** l'entretoise (3, 13) comporte au moins un évidement (10, 11, 12).

10. Réservoir en matière plastique selon la revendication 5 ou 6 **caractérisé par le fait que** l'entretoise (3, 13) a sur son parcours des épaisseurs et / ou des hauteurs variables.

11. Réservoir en matière plastique selon la revendication 4 **caractérisé par le fait que** la conduite (2, 4, 8, 17) a seulement dans la zone de l'ouverture de raccordement (18) une liaison par fusion de matière avec le réservoir à carburant (1, 14).

12. Réservoir en matière plastique selon la revendication 4 - 7 **caractérisé par le fait qu'**un élément de raccordement (26) est ménagé sur la conduite (2, 8, 17) transportant une substance.

13. Réservoir en matière plastique selon la revendication 12 **caractérisé par le fait que** l'élément de raccordement (26) a un connecteur (25) à raccorder en assemblage par fermeture géométrique à un coupleur (27).

14. Réservoir en matière plastique selon la revendication 12 ou 13 **caractérisé par le fait que** l'élément de raccordement (26) est conçu pour le raccordement d'une pompe à jet aspirant.

15. Réservoir en matière plastique selon l'une des revendication 4 - 14 **caractérisé par le fait que** l'élément de raccordement (26) est conçu en même temps pour fixer une pièce (28, 31) raccordée.

16. Réservoir en matière plastique selon l'une des revendication 4 - 15 **caractérisé par le fait que** la conduite (2, 8, 17) transportant une substance est disposée dans une première semi-coque du réservoir en matière plastique (1, 14) et que l'élément de raccordement (26) est conçu pour raccorder une autre conduite (2, 8, 17) transportant une substance disposée dans une deuxième semi-coque.
